(19) Europäisches Patentamt
European Patent Office
Office européen des brevets

(11) **EP 4 079 463 A1**

(12) **EUROPEAN PATENT APPLICATION**

(43) Date of publication:
**26.10.2022 Bulletin 2022/43**

(51) International Patent Classification (IPC):
**B25J 9/16** *(2006.01)*

(21) Application number: **21169351.0**

(22) Date of filing: **20.04.2021**

(52) Cooperative Patent Classification (CPC):
**B25J 9/1692;** B25J 9/1697; G05B 2219/39024;
G05B 2219/39026

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Bayerische Motoren Werke
Aktiengesellschaft
80809 München (DE)**

(72) Inventor: **PARK, Chulhun
Greer, SC 29651 (US)**

(54) **METHOD AND CONTROL UNIT FOR CALIBRATING A ROTATING HEAD SYSTEM**

(57)     A method (400) for determining a transformation matrix for calibrating a rotating head system (110) is described, wherein the rotating head system (110) comprises a head (111) which is configured to be rotated around a rotation point (121). The method (400) comprises rotating (401) a master head (111) of a master rotating head system (110) into K different orientations (211, 212, 213, 214) to face K different cameras (201, 202, 203, 204), respectively, with K>3; wherein the rotation point (121) of the master rotating head system (110) exhibits a target pose. The method (400) further comprises, for each of the K different orientations (211, 212, 213, 214), performing (402) Q movements of the rotation point (121) of the master rotating head system (110) away from the target pose, with Q≥6. In addition, the method (400) comprises, for each of the K different orientations (211, 212, 213, 214) and for each of the Q movements, capturing (403) at least two images using the camera (201, 202, 203, 204) that the master head (111) is facing, and determining (404) a displacement of a reference point (112) of the master head (111) within the at least two images. Furthermore, the method (400) comprises determining (405) the transformation matrix for determining an offset of an actual pose of the rotation point (121) of a rotating head system (110) different from the master rotating head system (110) to the target pose, based on the displacements for the K different orientations (211, 212, 213, 214) and for the Q movements.

400

turn the master head towards K different orientations — 401

perform Q movements of the rotation point of the master head — 402

capture images regarding the master head for the Q movements at the K different orientations — 403

determine the displacement of a reference point of the master head for the Q movements within the images — 404

determine the transformation based on the Q x K displacements — 405

**Fig. 4**

EP 4 079 463 A1

**Description**

The present document is directed at the calibration and the control of a rotating head system, such as a stud welding device.

Vehicles, notably cars, are typically manufactured within an assembly line using one or more rotating head systems. A rotating head system may, e.g., be configured to weld one or more studs onto the body of a vehicle. The rotating head system typically comprises a head which is configured to grab an object (e.g., a stud) and/or to perform an action (such as a welding operation). Furthermore, the rotating head system may comprise a base unit, e.g., for fixing the rotating head system to a robot. The head may be rotatably coupled with the base unit at a rotation point. The rotation point may allow a rotation around a rotational axis.

An erroneous positioning of the head of the rotating head system relative to the body of the vehicle (e.g., subsequent to maintenance of the rotating head system and/or subsequent to exchanging the rotating head system) may lead to a collision between the rotating head system and the vehicle body and/or may lead to a wrong placement of the one or more studs on the vehicle body.

The present document is directed at the technical problem of enabling an efficient and precise positioning of the head of a rotating head system relative to the body of a product, notably to a vehicle body, that is manufactured using the rotating head system.

According to an aspect a method for determining a transformation matrix for calibrating a rotating head system is described. The rotating head system comprises a head which is configured to be rotated around a rotation point. In particular, a rotation around a rotational axis which is positioned at the rotation point may be enabled. The head may be used to perform an operation (such as a welding process) during assembly of a product (notably a vehicle). In particular, the head may be configured to fix (e.g., to weld) one or more objects (e.g., studs) onto the body of a product. This process may be repeated for a sequence of products within an assembly line.

The method may be directed at determining a transformation matrix for calibrating the rotating head system (e.g., subsequent to maintenance of the rotating head system), such that the rotating head system is aware of the actual pose of the head of the rotating head system relative to the one or more products on the assembly line. The transformation matrix may be used for calibrating a plurality of different rotating head systems (which are preferably identical in construction, however possibly different due to manufacturing tolerances).

The method may be executed using a master rotating head system having a master head. The rotation point and/or the rotational axis of the master head may exhibit the target pose. The method may be executed using a calibration setup for calibrating the plurality of different rotating head systems. The calibration setup may comprise $K$ different cameras, with $K > 3$ (notably $K = 4$), which are arranged at K different angles and/or orientations around the rotation point (notably around the rotational axis) of the master head. In particular, the $K$ different cameras may be placed at different angles on a circle around the rotation point (notably the rotational axis) of the master head. The K different angles may span an angular range of 45° or more, or 90° or more. By placing cameras at $K$ different angles which span a relatively large angular range, the offset of the actual pose of the head of a rotating head system relative to the target pose of the master head may be determined in a particularly precise manner.

The method may comprise rotating the master head of the master rotating head system into $K$ different orientations to face the $K$ different cameras, respectively. In particular, the master head may be rotated such that the front face of the master head is (sequentially) facing each one of the $K$ different cameras. At each of the $K$ different orientations, the master head may be stopped to perform different movements of the rotation point and to capture images for the different movements (as outlined below).

In particular, the method may comprise, for each of the **$K$** different orientations, performing $Q$ different movements of the rotation point of the master rotating head system, with $Q \geq 6$ (notably $Q = 6$). Each movement may be a movement away from the target pose of the rotation point. In particular, the different movements may each pass through the target pose. Furthermore, the different movements may comprise at least three different translational movements and/or at least three different rotational movements.

In a preferred example, the $Q$ movements comprise: a first translational movement along the x-axis, wherein the first translational movement extends over a first translational distance $d_x$; a second translational movement along a y-axis, wherein the second translational movement extends over a second translational distance $d_y$; a third translational movement along a z-axis, wherein the third translational movement extends over a third translational distance $d_z$; a first rotational movement around the x-axis, wherein the first rotational movement extends over a first rotational distance $r_x$; a second rotational movement around the y-axis, wherein the second rotational movement extends over a second rotational distance $r_y$; and a third rotational movement around the z-axis, wherein the third rotational movement extends over a third rotational distance $r_z$.

Hence, a set of $Q$ different movements of the rotation point of the master head may be performed, which cover all possible degrees of freedom of the pose of the rotation point and/or the master head.

Furthermore, the method comprises, for each of the **$K$** different orientations and for each of the $Q$ different movements, capturing at least two images using the camera that the master head is facing. The different images may each show the front face of the master head. In particular, the different images may each show a particular reference point (e.g., an object held by the master head) on the front face of the master head.

Hence, when the master head is turned to a particular orientation, $Q$ different movements of the rotation point of the master head may be performed, and for each movement a pair of images may be captured.

The different movements may each exhibit a starting point and an end point. In a preferred example, the starting point and the end point of a movement are located at opposite sides of the target pose with respect to this movement. Furthermore, the starting point and the end point of a movement may be located at equal translational and/or rotational distances from the target pose (however with opposite signs). Hence, variational movements around the target pose may be performed, each movement having a starting point and an end point. The movements may extend over relatively small distances (e.g., between 5 and 10mm or between 0.1 and 0.5 degrees, or equivalent values measured in "rad").

The method may comprise capturing a starting image with the master head being positioned at the starting point and an end image with the master head being positioned at the end point of the movement. In other words, the pair of images for a particular movement (and for a particular orientation) may comprise a starting image (corresponding to the starting point of the particular movement) and an end image (corresponding to the end point of the particular movement), wherein the images are captured using the camera that the front face of the master head is facing at the particular orientation.

The starting point and the end point of a movement may have a translational and/or rotational distance from one another. In particular, the starting point and the end point of the first translational movement may exhibit the first translational distance $d_x$; the starting point and the end point of the second translational movement may exhibit the second translational distance $d_y$; the starting point and the end point of the third translational movement may exhibit the third translational distance $d_z$; the starting point and the end point of the first rotational movement may exhibit the first rotational distance $r_x$; the starting point and the end point of the second rotational movement may exhibit the second rotational distance $r_y$; and the starting point and the end point of the third rotational movement may exhibit the third rotational distance $r_z$.

In particular, the starting point of a translational movement may be at $-\,^{d_{x,y,z}}/_2$ from the target pose and the end point of the translational movement may be at $+\,^{d_{x,y,z}}/_2$ from the target pose. In a similar manner, the starting point of a rotational movement may be at $-\,^{r_{x,y,z}}/_2$ from the target pose and the end point of the rotational movement may be at $+\,^{r_{x,y,z}}/_2$ from the target pose.

Furthermore, the method may comprise, for each of the $K$ different orientations and for each of the $Q$ movements, determining a displacement of the reference point of the master head within the at least two images. In particular, the displacement between the starting position of the reference point of the master head within the starting image and the end position of the reference point of the master head within the end image may be determined. These displacements or displacement values may be determined for each one of the $Q$ movements and for each one of the $K$ different orientations.

In particular, the method may comprise: determining a first translational displacement $g_x$ based on the images (e.g. the starting image and the end image) captured for the first translational movement; determining a second translational displacement $g_y$ based on the images (e.g. the starting image and the end image) captured for the second translational movement; determining a third translational displacement $g_z$ based on the images (e.g. the starting image and the end image) captured for the third translational movement; determining a first rotational displacement $s_x$ based on the images (e.g. the starting image and the end image) captured for the first rotational movement; determining a second rotational displacement $s_y$ based on the images (e.g. the starting image and the end image) captured for the second rotational movement; and determining a third rotational displacement $s_z$ based on the images (e.g. the starting image and the end image) captured for the third rotational movement.

An image is typically a two-dimensional (2D) image within an image plane. A displacement within the image plane may comprise a first component (along a first axis of the image plane) and a second component (along a perpendicular second axis of the image plane). The method may comprise determining a first component and a second component within the image plane for each one of the first, second and third translational and rotational displacements, with $g_{x1}$, $g_{y1}$, $g_{z1}$, $s_{x1}$, $s_{y1}$, $s_{z1}$ being the first components of the first, second and third translational displacements and the first, second and third rotational displacements, respectively, and with $g_{x2}$, $g_{y2}$, $g_{z2}$, $s_{x2}$, $s_{y2}$, $s_{z2}$ being the second components of the first, second and third translational displacements and the first, second and third rotational displacements, respectively.

The method may further comprise determining the transformation matrix for determining the offset of the actual pose of the rotation point of a rotating head system different from the master rotating head system to the target pose, based on the displacements for the $K$ different orientations and for the $Q$ different movements. In particular, the transformation matrix may be determined based on the first, second and third translational displacements and based on the first, second and third rotational displacements, notably based on $g_{x1}$, $g_{y1}$, $g_{z1}$, $s_{x1}$, $s_{y1}$, $s_{z1}$ and $g_{x2}$, $g_{y2}$, $g_{z2}$, $s_{x2}$, $s_{y2}$, $s_{z2}$ for each of the $K$ different orientations.

The pre-determined transformation matrix may then be used when calibrating one or more different rotating head systems within the calibration setup comprising the $K$ different cameras. By doing this, an efficient and precise calibration may be performed without the need of positioning the different cameras in defined positions and/or orientations. In particular, a precise calibration of the different rotational head systems may be performed, without precise positioning of the cameras.

The method may comprise determining the transformation matrix based on the translational and/or rotational distances, notably based on the first, second and third translational distances and the first, second and third rotational distances, for the $Q$ movements. In particular, the transformation matrix may be determined based on: a ratio of the (first and second components of the) first translational displacement with respect to the first translational distance; a ratio of the (first and second components of the) second translational displacement with respect to the second translational distance; a ratio of the (first and second components of the) third translational displacement with respect to the third translational distance; a ratio of the (first and second components of the) first rotational displacement with respect to the first rotational distance; a ratio of the (first and second components of the) second rotational displacement with respect to the second rotational distance; and a ratio of the (first and second components of the) third rotational displacement with respect to the third rotational distance. By doing this, a particularly precise transformation matrix may be determined.

The transformation matrix may be an inverse or pseudo-inverse or an estimate of an inverse of a Jacobian matrix. The Jacobian matrix may comprise a row vector for the first components and a row vector for the second components of each one of the first, second and third translational and rotational displacements. The row vector for the first components may be

$$\left[\frac{g_{x1}}{d_x}, \frac{g_{y1}}{d_y} \cdot \frac{g_{z1}}{d_z}, \frac{s_{x1}}{r_x}, \frac{s_{y1}}{r_y}, \frac{s_{z1}}{r_z}\right]$$

and the row vector for the second components may be

$$\left[\frac{g_{x2}}{d_x}, \frac{g_{y2}}{d_y} \cdot \frac{g_{z2}}{d_z}, \frac{s_{x2}}{r_x}, \frac{s_{y2}}{r_y}, \frac{s_{z2}}{r_z}\right].$$

The above formulas assume the rotational distances $r_x$, $r_y$, $r_z$ to be measured in radian. If the rotational distances $r_x$, $r_y$, $r_z$ are measured in degrees, a conversion from degrees into radian may need to be performed, e.g., using the formulas $r_x[°] \cdot \frac{\pi}{180} \to r_x[rad]$, $r_y[°] \cdot \frac{\pi}{180} \to r_y[rad]$, and $r_z[°] \cdot \frac{\pi}{180} \to r_z[rad]$.

The Jacobian matrix may comprise row vectors for each one of the $K$ orientations. As a result of this, a particular precise transformation matrix may be determined.

As indicated above, the transformation matrix may be used for calibrating (and operating) a rotating head system. The calibration may be performed within the calibration setup of $K$ cameras that has been used for determining the transformation matrix (using the master rotating head system).

The method may comprise (during a calibration phase) rotating the head of the rotating head system (around the rotation point) into the $K$ different orientations to face the $K$ different cameras, respectively (wherein $K$ is an integer). As indicated above, each camera may be configured to capture an image of the front face of the head. Alternatively, or in addition, the head may comprise a grabbing device (e.g., with two fingers). The grabbing device may be configured to hold a measurement target (e.g., with a circle). Each camera may be configured to capture an image of the measurement target (notably the circle) held by the grabbing device of the head of the rotating head system.

Hence, the front face of the head may comprise one or more tools (e.g., for welding and/or for grabbing), which may be used as the reference point of the front face of the head (wherein an identically positioned reference point has been used within the master head of the master rotating head system for determining the transformation matrix). In particular, the head may comprise a grabbing device for grabbing a stud, and the reference point may be located on the grabbing device. By way of example, the reference point may be provided by a measurement target that is held by the grabbing device.

The method may further comprise capturing $K$ images using the $K$ different cameras, respectively. The K (two-dimensional) images may be determined sequentially as the head is turned towards the $K$ different cameras. In particular, a first image may be captured when the head is facing a first camera, a second image may be captured when the head is facing the second camera, and so on, until capturing a $K^{th}$ image when the head is facing the $K^{th}$ camera.

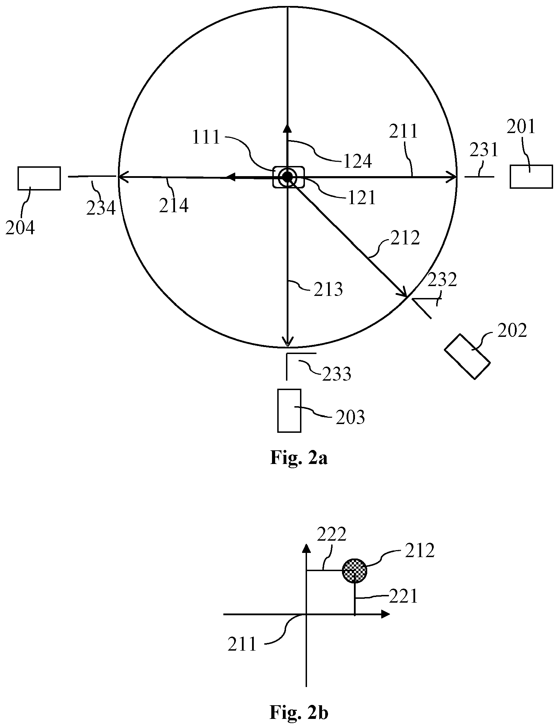

The reference point of the (front face of the) head may exhibit a target position within each one of the $K$ images, if the head (or the rotation point of the head) exhibits the target pose. The $K$ different cameras may be positioned around the rotation point such that an offset of the actual pose of the head (or the rotation point) from the target pose leads to a deviation of the reference point of the head from the target position within at least one of the $K$ images. Preferred angles and/or orientations are shown in Fig. 2a of the present document.

The method may comprise determining $K$ deviations (i.e., deviation values or deviation vectors) of the reference point of the head from the target position within the $K$ images, respectively. The deviation may be zero, if the reference point is located at the target position.

Furthermore, the method may comprise determining an offset of the head from the target pose based on the $K$ deviations using the transformation matrix, wherein the transformation matrix may comprise a Jacobian matrix or an estimate of an inverse of a Jacobian matrix. The transformation matrix has been determined beforehand using the method described in the present document. As indicated above, the offset may be indicative of a translational offset and/or of a rotational offset from the target pose. Hence, the offset may be a 3- or a 6-dimensional vector.

The offset may be provided as the outcome of the calibration phase of the rotating head system. Furthermore, the offset may be used during operation of the rotating head system. In particular, the method may comprise operating the head in dependence of the offset, wherein operating the head may comprise fixing (e.g. welding) one or more objects (e.g. studs) to a product using the head of the rotating head system. By taking into account the offset during operation of the rotating head system, a precise and collision-free operation of the rotating head system may be ensured.

The transformation matrix may be dependent on the $K$ different orientations and/or angles of the cameras. Alternatively, or in addition, the transformation matrix may be dependent on positions of the $K$ different cameras relative to the rotation point. As a result of this, the offset may be determined in a precise manner.

The method may comprise determining a deviation vector indicative of the $K$ deviations of the reference point of the head from the target position. The deviation vector may comprise vector elements for each of the $K$ images. Furthermore, the method may comprise multiplying the deviation vector with the transformation matrix to determine an offset vector, wherein the offset vector is indicative of the translational offset and/or the rotational offset of the actual pose of the head from the target pose. As a result of this, the offset may be determined in an efficient and precise manner.

The deviation of the reference point of the head from the target position within a particular image of the $K$ images may comprise a first deviation component along the first axis (e.g., the x-axis) of the particular image and a second deviation component along the second axis (e.g., the y-axis) of the particular image. The deviation vector may comprise as vector elements the first deviation components and the second deviation components for each of the $K$ deviations, i.e., for each one of the $K$ images, thereby allowing the offset to be determined in a precise manner.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer and/or on a controller, e.g., the controller of a robot.

According to a further aspect, a control unit for determining a transformation matrix for calibrating a rotating head system is described, wherein the rotating head system comprises a head which is configured to be rotated around a rotation point. The control unit is configured to rotate a master head of a master rotating head system into $K$ different orientations to face $K$ different cameras, respectively, with $K > 3$, wherein the rotation point and/or the master head of the master rotating head system exhibits a target pose. Furthermore, the control unit is configured, for each of the $K$ different orientations, to perform $Q$ movements of the rotation point of the master rotating head system, with $Q \geq 6$. In addition, the control unit is configured, for each of the $K$ different orientations and for each of the $Q$ movements, to capture at least two images using the camera that the master head is facing, and to determine a displacement of a reference point of the master head within the at least two images. The control unit is further configured to determine the transformation matrix for determining an offset of an actual pose of the rotation point of a rotating head system different from the master rotating head system to the target pose, based on the displacements for the $K$ different orientations and for the $Q$ movements.

According to a further aspect, a control unit for controlling a rotating head system which is configured to attach a part onto a body of a product using a head which is configured to be rotated around a rotation point is described. The control unit may be configured to rotate the head into $K$ different orientations to face $K$ different cameras, respectively, with $K > 3$, and to capture $K$ images (regarding the front face of the head) using the $K$ different cameras, respectively. Furthermore, the control unit is configured to determine $K$ deviations of a reference point of the head from a target position within the *K* images, respectively, and to determine an offset of the head from a target pose based on the *K* deviations using a transformation matrix. In addition, the control unit may be configured to operate the head for attaching a part (notably a stud) onto a body of a product in dependence of the offset.

According to a further aspect, a rotating head system comprising the control unit which is described in the present document is described.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein

Figure 1a shows an example body of a vehicle;
Figure 1b illustrates an example welding process using a rotating head system;
Figure 1c shows an example reference point on the front face of the head of a rotating head system;
Figure 2a shows an example arrangement of sensors (notably of cameras) around the head of a rotating head system;
Figure 2b illustrates the offset of the reference point of the head of a rotating head system from a target position;
Figure 3 shows a flow chart of an example method for operating a rotating head system; and
Figure 4 shows a flow chart of an example method for determining a transformation for calibrating a rotating head system

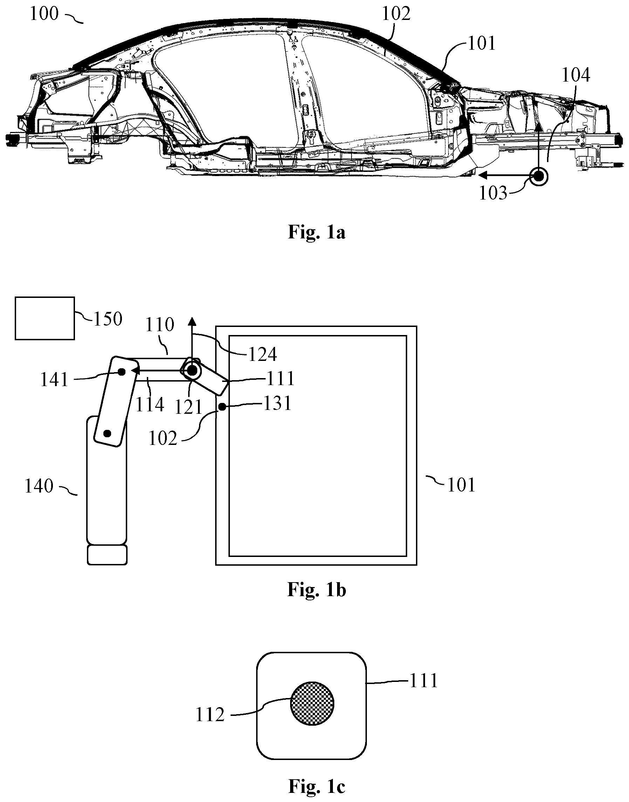

As outlined in the introductory section, the present document is directed at operating and/or calibrating a rotating head system in an efficient, precise and reliable manner. In this context, Fig. 1a shows the body 101 of a vehicle 100, notably of a car, as an example for a general product which is assembled within an assembly line. Typically, an assembly line is used for assembling a sequence (e.g., thousands) of different vehicles 100 (which are at least partially identical to one another and/or which are of the same type).

Furthermore, Fig. 1a highlights a place 102 within the body 101, where one or more studs are to be fixed to the body 101 within the assembly line. In addition, Fig. 1a shows a vehicle coordinate system 104 which is positioned at a vehicle reference point 103. The vehicle reference point 103 may be the center of the front axis of the vehicle 100. The vehicle coordinate system 104 may comprise an x-axis (pointing from the front to the back of the vehicle 100), a y-axis (pointing from the left to the right of the vehicle 100) and a z-axis (pointing from the bottom to the top of the vehicle 100).

Fig 1b shows an excerpt of an assembly line. In particular, Fig. 1b illustrates a rotating head system 110 which comprises a head 111 that may be rotated around a rotation point 121. The head 111 may be configured to fix, notably to weld, one or more objects (e.g., studs) 131 onto the body 101 of the vehicle 100 (i.e., product). The pose of the head 111 may be indicated within a head coordinate system 124 having its origin at the rotation point 121.

The head 111 of the rotating head system 110 may be attached to a base unit 114 of the rotating head system 110 via the rotation point 121. The base unit 114 may be fixed as a fixation point 141 to a robot 140. The fixation point 141 may have a defined position with regards to the product coordinate system 104. On the other hand, the pose of the rotation point 121 may vary depending on the rotating head system 110 which is fixed to the fixation point 141.

In general terms, the rotating head system 110, notably the head 111 of the rotating head system 110, may be configured to perform an operation on a product 100 which is produced within an assembly line. Example operations are: a holding operation for holding an object 131 (e.g., a stud) at a defined pose with regards to the product 100; and/or a fixing operation (e.g., a welding operation) for fixing an object 131 in a defined pose on the product 100. The head 110 may comprise an actor (such as a grabbing device and/or a welding device) for performing the operation.

The head 111 of the rotating head system 110 may exhibit a reference point 112 at the front face of the head 111 (as shown in Fig. 1c). The reference point 112 may e.g. correspond to a grabbing device, e.g. for grabbing a stud 131.

In order to enable an exact placement of a stud 131 (i.e., an object) onto the body 101 and/or in order to avoid a collision between the head 111 and the body 101 during operation of the rotating head system 110, the head 111 and/or the rotating point 121 should exhibit a target pose (i.e., a target position and/or a target orientation) relative to the vehicle coordinate system 104, notably when fixing the stud 131 onto the body 101 of the vehicle 100. The method described in the present document may be directed at determining the actual pose of the head 111 or the rotation point 121 of the rotating head system 110 relative to the vehicle coordinate system 104 (i.e. in general terms, the product coordinate system 104).

Fig. 2a illustrates a scheme and/or a system for determining the actual pose of the head 111, notably of the rotation point 121, of the rotating head system 110. The offset between the actual pose and the target pose may be used to operate the rotating head system 100, in order to enable a precise and a collision-free operation of the head 111.

Fig. 2a shows the head 111 and a plurality of sensors 201, 202, 203, 204, notably a plurality of cameras, which are placed at different angles 231, 232, 233, 234 and/or orientations 211, 212, 213, 214 around the head 111 (i.e.,

around the rotation point 121 and/or around the rotational axis). Example angles 231, 232, 233, 234 and/or orientations 211, 212, 213, 214 are 90°, 135°, 180°, and 270° (possibly offset by ±90°). The head 111 may be turned sequentially to the different orientations 211, 212, 213, 214. The respective sensor 201, 202, 203, 204 may then capture sensor data (notably image data) regarding the reference point 112 of the head 111. Furthermore, the control unit 150 may be configured to determine, based on the respective sensor data, a deviation of the actual position of the reference point 112 from a target position of the reference point 112.

Fig. 2b shows an example image captured by a sensor 201, 202, 203, 204. The image shows the reference point 112 located at an actual position 212. Furthermore, Fig. 2b indicates the target position 211 for the reference point 112. The deviation between the actual position 212 and the target position 211 is given by a first deviation component 221 along a first axis and a second deviation component 222 along a second axis of the respective image.

When using $K$ measurements for $K$ different orientations 211, 212, 213, 214, $K$ different (multi-dimensional) deviations between the actual position 212 and the target position 211 can be determined. The $K$ different deviations may be combined into a deviation vector $[DEV]$. The deviation vector $[DEV]$ may be a $2K$ x 1 vector which comprises the deviation components 221, 222 for the $K$ different orientations 211, 212, 213, 214.

Using a Jacobian matrix J, the deviation vector $[DEV]$ may be used to determine the actual pose of the head 111 and/or the rotation point 121 of the rotating head system 110 within the product coordinate system 104. Notably an offset of the actual pose from a target pose may be determined. The actual pose or the offset can be taken into account during operation of the rotating head system 110, in order to enable the rotating head system 110 to operate in a precise and collision-free manner.

The Jacobian matrix $J$ may be a $2K \times 6$ matrix.

The Jacobian matrix $J$ may be inversed using a known inversion method to provide a (pseudo) inverse matrix $J^{-1}$. The pose offset $P = [\Delta x, \Delta y, \Delta z, \Delta rx, \Delta ry, \Delta rz]^T$ between the target pose and the actual pose of the head 111 or the rotation point 121 may then be determined as

$$P = J^{-1}[DEV].$$

The (pseudo) inverse matrix $J^{-1}$ for a particular setup of cameras 201, 202, 203, 204 may be determined in advance. In other words, the transformation for transforming the deviation into the pose offset may be determined in advance.

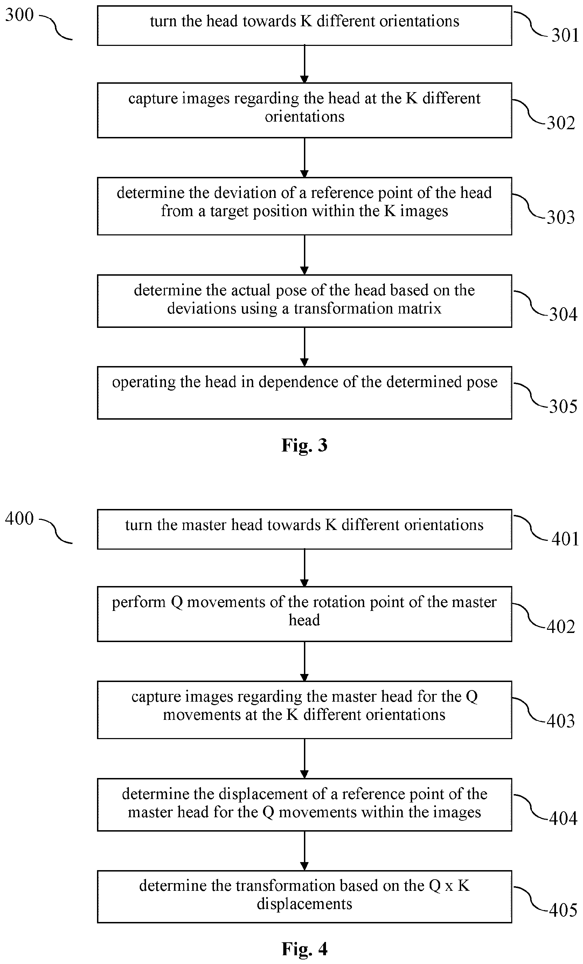

Fig. 3 shows a flow chart of an example method 300 for operating a rotating head system 110, wherein the rotating head system 110 comprises a head 111 which is configured to be rotated around a rotation point 121. The head 111 may be used for welding studs 131 onto the bodies 101 of products 100 (notably vehicles) which are manufactured on an assembly line. In general terms, the head 111 may be used to perform an operation on a product 100 which is manufacture on an assembly line.

The method 300 may comprise a calibration phase, during which an offset of the actual pose of the rotation point 121 or the head 111 from a target pose is determined. The offset may be used subsequently during operation of the rotating head system 110, in order to allow for a precise and collision-free operation of the rotating head system 110.

The method 300 comprises rotating 301 the head 111 into $K$ different orientations 211, 212, 213, 214 (notably orientation angles 231, 232, 233, 234) to face $K$ different cameras 201, 202, 203, 204, respectively, with $K > 3$ (notably $K = 4$). The head 111 may comprise one or more tools at the front face of the head 111 (e.g., a welding tool and/or a grabbing device). The head 111 may be rotated 301 around the rotation point 121 such that the front face of the head 111 faces in a sequential manner the $K$ different cameras 201, 202, 203, 204.

Furthermore, the method 300 comprises capturing 302 $K$ images using the $K$ different cameras 201, 202, 203, 204, respectively. The $K$ images may be captured sequentially as the head 111 is rotated into the $K$ different orientations 211, 212, 213, 214, such that each image is indicative of the front face of the head 111. If the head 111 is positioned correctly with respect to the product 100, the front face of the head 111, notably a reference point 112 on the front face of the head 111, should be located at a target position 211 within each one of the $K$ images. However, an offset of the actual pose of the head 111 (or rotation point 121) from the target pose of the head 111 (or rotation point 121) typically leads to a deviation of the reference point 112 from the target position 211 in at least one of the $K$ images.

The method 300 further comprises determining 303 $K$ deviations of the reference point 112 of the head 111 from the target position 211 within the $K$ images, respectively. Hence, $K$ deviation values or deviation vectors may be determined. The method 300 may comprise determining 304 an offset of the actual pose of the head 111 from the target pose based on the $K$ deviations using a (pre-determined) transformation matrix (notably using an estimate of an inverse of a Jacobian matrix which describes the measurement setup for measuring the $K$ deviations). The offset may describe the translational and/or rotational offset of the actual pose of the head 111 from the target pose.

In addition, the method 300 may comprise operating 305 the head 111 for manufacturing products 100, in dependence of the offset. In particular, an operation, such as a welding process, which is performed by the rotating head system 110 may be performed in dependence of the offset which has been determined during calibration. By doing this, a precise and collision-free operation of the rotating head system 110 may be ensured.

The transformation or transformation matrix may be determined based on known orientations 211, 212, 213, 214 of the different cameras 201, 202, 203, 204. This requires the different cameras 201, 202, 203, 204 to be positioned in a precise manner, which may be a complex task.

The transformation matrix may be determined in an efficient manner using a master rotating head system 110 which exhibits a rotation point 121 and/or a master head 111 having the target pose. The master head 111 of the master rotating head system 110 may be rotated towards the $K$ different orientations 211, 212, 213, 214 (notably orientation angles 231, 232, 233, 234) to face the $K$ different cameras 201, 202, 203, 204, respectively. For each orientation 211, 212, 213, 214 $Q$ different movements of the rotation point 121 of the mater rotating head system 110 may be performed, with $Q \geq 6$, notably $Q = 6$. In particular, at least one movement per degree of freedom (DOF) of the pose of the rotation point 121 and/or the master head 110 may be performed. Furthermore, one or more images may be captured by the respective camera 201, 202, 203, 204 for each movement.

Example moments of the rotation point 121 are

- a first translational movement along the x-axis, wherein the first translational movement extends over a first translational distance $d_x$ (e.g. measured in mm);
- a second translational movement along the y-axis, wherein the second translational movement extends over a second translational distance $d_y$ (e.g. measured in mm);
- a third translational movement along the z-axis, wherein the third translational movement extends over a third translational distance $d_z$ (e.g. measured in mm);
- a first rotational movement around the x-axis, wherein the first rotational movement extends over a first rotational distance $r_x$ (e.g. measured in rad);
- a second rotational movement around the y-axis, wherein the second rotational movement extends over a second rotational distance $r_y$ (e.g. measured in rad); and/or
- a third rotational movement around the z-axis, wherein the third rotational movement extends over a third rotational distance $r_z$ (e.g. measured in rad).

In a preferred example, the different movements are performed around the target pose. Hence, a translational movement may comprise a negative translational movement to $- d^x/2$, $- d^y/2$ or $- d^z/2$ and a positive translational movement to $+ d^x/2$, $+ d^y/2$ or $+d^z/2$, respectively (starting from the target pose). In a similar manner, a rotational movement may comprise a negative rotation to $— r^x/2$, $- r^y/2$ or $- r^z/2$ and a positive rotation to $+ r^x/_2$, $+ r^y/2$ or $+ r^z/2$, respectively (starting from the target pose).

For each of the $Q$ movements of the rotation point 121, the corresponding displacement of the reference point 112 within the images of a camera 201, 202, 203, 204 may be measured. This may be achieved by capturing two images for each movement of the rotation point 121 and by measuring the displacement of the reference point 112 within the pair of images. In particular, for each movement, a starting image may be captured subsequent to performing the negative movement or negative rotation, and an end image may be captured subsequent to performing the positive movement or positive rotation. The overall displacement of the reference point 112 for a particular movement may be determined based on the distance of the reference point 112 within the starting and the end image, which have been captured for the particular movement.

The displacement comprises a first displacement component for the first axis of the image(s) and a second displacement component for the second axis of the image(s). As a result of this, for the different movements, the following displacement components may be determined,

- a first displacement component $g_{x1}$ and a second displacement component $g_{x2}$ for the first translational movement;
- a first displacement component $g_{y1}$ and a second displacement component $g_{y2}$ for the second translational movement;
- a first displacement component $g_{z1}$ and a second displacement component $g_{z2}$ for the third translational movement;
- a first displacement component $s_{x1}$ and a second displacement component $s_{x2}$ for the first rotational movement;
- a first displacement component $s_{y1}$ and a second displacement component $s_{y2}$ for the second rotational movement; and/or
- a first displacement component $s_{z1}$ and a second displacement component $s_{z2}$ for the third rotational movement.

By way of example, the reference point 112 may be positioned at $[a_1, a_2]$ within the starting image for a particular movement and at $[b_1, b_2]$ within the end image for the particular movement. The first and second displacement components for the particular movement may then be determined as $(b_1 - a_1)$ and $(b_2 - a_2)$, respectively.

As outlined above, the Jacobian matrix comprises row vectors for each axis of the image plane and for each orientation 211, 212, 213, 214. The row vectors for the first and second axis of the image plane for a particular orientation 211, 212, 213, 214 may be determined based on the displacements that have been measured for the particular orientation 211, 212, 213, 214. In particular, the row vectors may be determined for the first axis as,

$$\left[ \frac{g_{x1}}{d_x}, \frac{g_{y1}}{d_y} \cdot \frac{g_{z1}}{d_z}, \frac{s_{x1}}{r_x}, \frac{s_{y1}}{r_y}, \frac{s_{z1}}{r_z} \right]$$

and for the second axis as

$$\left[ \frac{g_{x2}}{d_x}, \frac{g_{y2}}{d_y} \cdot \frac{g_{z2}}{d_z}, \frac{s_{x2}}{r_x}, \frac{s_{y2}}{r_y}, \frac{s_{z2}}{r_z} \right].$$

The above formulas assume the rotational distances $r_x$, $r_y$, $r_z$ to be measured in radian. If the rotational distances $r_x$, $r_y$, $r_z$ are measured in degrees, a conversion from degrees into radian may need to be performed, e.g., using the formulas $r_x[°] \cdot \frac{\pi}{180} \to r_x[rad]$, $r_y[°] \cdot \frac{\pi}{180} \to r_y[rad]$, and $r_z[°] \cdot \frac{\pi}{180} \to r_z[rad]$.

In a similar manner, the row vectors may be determined for each one of the $K$ orientations 211, 212, 213, 214, thereby providing the $2K$ row vectors of the Jacobian matrix. The Jacobian matrix may thus be a $2K \times Q$ matrix. The Jacobian matrix may be inverted and may then be used as the transformation matrix for determining the pose offsets of one or more different rotating head systems 110.

Fig. 4 shows a flow chart of an example (possibly Computer implemented) method 400 for determining a transformation matrix for calibrating a rotating head system 110, wherein the rotating head system 110 comprises a head 111 which is configured to be rotated around a rotation point 121. The method 400 may be executed by a controller of a robot 140 for positioning the rotating head system 110, notably for positioning the rotation point 121 of the rotating head system 100, (as shown in Fig. 1b). The method 400 makes use of a master rotating head system 110 having a rotating point 121 which exhibits the target pose. The method 400 is directed at determining a transformation matrix which allows calculating the offset between the actual pose of an arbitrary rotating head system 110 and the target pose of the master rotating head system 110. The different rotating head systems 110 (including the master rotating head system 110) may be identical in construction. However, due to construction tolerances, the actual poses of the rotation points 121 of the different rotating head systems 110 may differ from one another and from the target pose. The target pose may be the pose which allows the rotating head system 110 to operate correctly and/or precisely within an assembly line for manufacturing a product 100.

The method 400 may be executed prior to manufacturing products 100 within an assembly line. The method 400 may be executed for determining a single transformation matrix for the calibration setup comprising the $K$ different cameras 201, 202, 203, 204. This transformation matrix may then be used for determining the pose offsets of a plurality of different rotating head systems 110 (using the calibration setup).

The method 400 may comprise rotating 401 the master head 111 of the master rotating head system 110 into the $K$ different orientations 211, 212, 213, 214 to face the $K$ different cameras 201, 202, 203, 204, respectively, with $K > 3$. As indicated above, the rotation point 121 of the master rotating head system 110 exhibits the target pose.

Furthermore, the method 400 comprises, for each of the $K$ different orientations 211, 212, 213, 214, performing 402 $Q$ movements of the rotation point 121 of the master rotating head system 110, with $Q \geq 6$. The $Q$ different movements may be identical for the $K$ different orientations 211, 212, 213, 214. The rotation point 121 of the master rotating head system 110 may perform different translational and/or rotational movements. Each movement may have a starting point and an end point. Furthermore, each movement may pass through the target pose.

The method 400 further comprises, for each of the $K$ different orientations 211, 212, 213, 214 and for each of the $Q$ movements, capturing 403 at least two images using the camera 201, 202, 203, 204 that the master head 111 is facing. In particular, a starting image may be captured at the starting point and an end image may be captured at the end point of each one of the movements. The images may be indicative of the position of a reference point 112 on the front face of the master head 111.

In addition, the method 400 comprises, for each of the $K$ different orientations 211, 212, 213, 214 and for each of the $Q$ movements, determining 404 a displacement of the reference point 112 of the master head 111 within the at least two images (notably within the starting image and the end image). In particular, the distance between the starting position of the reference point 112 within the starting image and the end position of the reference point 112 within the end image of a movement may be determined as the displacement for this movement. Such a displacement or displacement value may be determined for each movement and for each orientation 211, 212, 213, 214.

Furthermore, the method 400 comprises determining 405 the transformation matrix for determining the offset of the actual pose of the rotation point 121 of a rotating head system 110 different from the master rotating head system 110 to the target pose, based on the displacements for the $K$ different orientations 211, 212, 213, 214 and for the $Q$ movements. By doing this, the transformation matrix may be determined in an efficient and precise manner, thereby allowing the different rotating head systems 110 to be calibrated in an efficient and precise manner (using the calibration setup for which the transformation matrix has been determined).

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

**Claims**

1. A method (400) for determining a transformation matrix for calibrating a rotating head system (110), wherein the rotating head system (110) comprises a head (111) which is configured to be rotated around a rotation point (121); wherein the method (400) comprises,

    - rotating (401) a master head (111) of a master rotating head system (110) into $K$ different orientations (211, 212, 213, 214) to face $K$ different cameras (201, 202, 203, 204), respectively, with $K > 3$; wherein the rotation point (121) of the master rotating head system (110) exhibits a target pose;
    - for each of the $K$ different orientations (211, 212, 213, 214), performing (402) $Q$ movements of the rotation point (121) of the master rotating head system (110) away from the target pose, with $Q \geq 6$;
    - for each of the $K$ different orientations (211, 212, 213, 214) and for each of the $Q$ movements, capturing (403) at least two images using the camera (201, 202, 203, 204) that the master head (111) is facing;
    - for each of the $K$ different orientations (211, 212, 213, 214) and for each of the $Q$ movements, determining (404) a displacement of a reference point (112) of the master head (111) within the at least two images; and
    - determining (405) the transformation matrix for determining an offset of an actual pose of the rotation point (121) of a rotating head system (110) different from the master rotating head system (110) to the target pose, based on the displacements for the $K$ different orientations (211, 212, 213, 214) and for the $Q$ movements.

2. The method (400) of claim 1, wherein the $Q$ movements comprise at least three different translational movements and at least three different rotational movements.

3. The method (400) of previous claims, wherein the $Q$ movements each pass through the target pose.

4. The method (400) of previous claims, wherein

    - a movement exhibits a starting point and an end point; and
    - the method (400) comprises,

        - capturing a starting image with the master head (111) being positioned at the starting point and an end image with the master head (111) being positioned at the end point of the movement; and
        - determining the displacement between a starting position of the reference point (112) of the master head (111) within the starting image and an end position of the reference point (112) of the master head (111) within the end image.

5. The method (400) of claim 4, wherein

    - the starting point and the end point of a movement have a translational and/or rotational distance from one another; and
    - the method (400) comprises determining the transformation matrix based on the translational and/or rotational distances for the $Q$ movements.

6. The method (400) of any of claims 4 to 5, wherein

- the starting point and the end point of a movement are located at opposite sides from the target pose with respect to the movement; and/or
- the starting point and the end point of a movement are located at equal translational and/or rotational distances from the target pose.

7. The method (400) of previous claims, wherein the $Q$ movements comprise

- a first translational movement along an x-axis, which extends over a first translational distance $d_x$;
- a second translational movement along a y-axis, which extends over a second translational distance $d_y$;
- a third translational movement along a z-axis, which extends over a third translational distance $d_z$;
- a first rotational movement around the x-axis, which extends over a first rotational distance $r_x$;
- a second rotational movement around the y-axis, which extends over a second rotational distance $r_y$;
- a third rotational movement around the z-axis, which extends over a third rotational distance $r_z$; and
- the method (400) comprises determining the transformation matrix based on the first, second and third translational distances and based on the first, second and third rotational distances.

8. The method (400) of claim 7, wherein the method comprises,

- determining a first translational displacement $g_x$ based on the images captured for the first translational movement;
- determining a second translational displacement $g_y$ based on the images captured for the second translational movement;
- determining a third translational displacement $g_z$ based on the images captured for the third translational movement;
- determining a first rotational displacement $s_x$ based on the images captured for the first rotational movement;
- determining a second rotational displacement $s_y$ based on the images captured for the second rotational movement;
- determining a third rotational displacement $s_z$ based on the images captured for the third rotational movement; and
- determining the transformation matrix based on the first, second and third translational displacements and based on the first, second and third rotational displacements.

9. The method (400) of claim 8, wherein the transformation matrix is determined based on

- a ratio of the first translational displacement with respect to the first translational distance;
- a ratio of the second translational displacement with respect to the second translational distance;
- a ratio of the third translational displacement with respect to the third translational distance;
- a ratio of the first rotational displacement with respect to the first rotational distance;
- a ratio of the second rotational displacement with respect to the second rotational distance; and
- a ratio of the third rotational displacement with respect to the third rotational distance.

10. The method (400) of any of claims 8 to 9, wherein the method (400) comprises

- determining a first component and a second component within a plane of the images for each one of the first, second and third translational and rotational displacements; and
- determining the transformation matrix based on the first components and the second components for each one of the first, second and third translational and rotational displacements.

11. The method (400) of claim 10, wherein

- the transformation matrix is an inverse or pseudo-inverse of a Jacobian matrix; and
- the Jacobian matrix comprises a row vector for the first components and a row vector for the second components of each one of the first, second and third translational and rotational displacements.

**12.** The method (400) of claim 11, wherein the row vector for the first components is

$$\left[\frac{g_{x1}}{d_x}, \frac{g_{y1}}{d_y} \cdot \frac{g_{z1}}{d_z}, \frac{s_{x1}}{r_x}, \frac{s_{y1}}{r_y}, \frac{s_{z1}}{r_z}\right]$$

with $g_{x1}$, $g_{y1}$, $g_{z1}$, $s_{x1}$, $s_{y1}$, $s_{z1}$ being the first components of the first, second and third translational displacements and the first, second and third rotational displacements, respectively; and wherein the row vector for the second components is

$$\left[\frac{g_{x2}}{d_x}, \frac{g_{y2}}{d_y} \cdot \frac{g_{z2}}{d_z}, \frac{s_{x2}}{r_x}, \frac{s_{y2}}{r_y}, \frac{s_{z2}}{r_z}\right]$$

with $g_{x2}$, $g_{y2}$, $g_{z2}$, $s_{x2}$, $s_{y2}$, $s_{z2}$ being the second components of the first, second and third translational displacements and the first, second and third rotational displacements, respectively.

**13.** The method (400) of any of claims 11 to 12, wherein the Jacobian matrix comprises row vectors for each one of the $K$ orientations (211, 212, 213, 214).

**14.** A method (300) for operating a rotating head system (110), wherein the rotating head system (110) comprises a head (111) which is configured to be rotated around a rotation point (121); wherein the method (300) comprises,

- rotating (301) the head (111) into $K$ different orientations (211, 212, 213, 214) to face $K$ different cameras (201, 202, 203, 204), respectively, with $K > 3$;
- capturing (302) $K$ images using the $K$ different cameras (201, 202, 203, 204), respectively;
- determining (303) $K$ deviations of a reference point (112) of the head (111) from a target position (211) within the $K$ images, respectively;
- determining (304) an offset of an actual pose of the head (111) from a target pose based on the $K$ deviations using a transformation matrix determined according to any of the previous claims; and
- operating (305) the head (111) in dependence of the offset.

**15.** A control unit (150) for determining a transformation matrix for calibrating a rotating head system (110), wherein the rotating head system (110) comprises a head (111) which is configured to be rotated around a rotation point (121); wherein the control unit (150) is configured to,

- rotate a master head (111) of a master rotating head system (110) into $K$ different orientations (211, 212, 213, 214) to face $K$ different cameras (201, 202, 203, 204), respectively, with $K > 3$; wherein the rotation point (121) of the master rotating head system (110) exhibits a target pose;
- for each of the $K$ different orientations (211, 212, 213, 214), perform $Q$ movements of the rotation point (121) of the master rotating head system (110) away from the target pose, with $Q \geq 6$;
- for each of the $K$ different orientations (211, 212, 213, 214) and for each of the $Q$ movements, capture at least two images using the camera (201, 202, 203, 204) that the master head (111) is facing;
- for each of the $K$ different orientations (211, 212, 213, 214) and for each of the $Q$ movements, determine a displacement of a reference point (112) of the master head (111) within the at least two images; and
- determine the transformation matrix for determining an offset of an actual pose of the rotation point (121) of a rotating head system (110) different from the master rotating head system (110) to the target pose, based on the displacements for the $K$ different orientations (211, 212, 213, 214) and for the $Q$ movements.

**Fig. 1a**

**Fig. 1b**

**Fig. 1c**

**Fig. 2a**

**Fig. 2b**

300

| turn the head towards K different orientations | 301 |

↓

| capture images regarding the head at the K different orientations | 302 |

↓

| determine the deviation of a reference point of the head from a target position within the K images | 303 |

↓

| determine the actual pose of the head based on the deviations using a transformation matrix | 304 |

↓

| operating the head in dependence of the determined pose | 305 |

**Fig. 3**

400

| turn the master head towards K different orientations | 401 |

↓

| perform Q movements of the rotation point of the master head | 402 |

↓

| capture images regarding the master head for the Q movements at the K different orientations | 403 |

↓

| determine the displacement of a reference point of the master head for the Q movements within the images | 404 |

↓

| determine the transformation based on the Q x K displacements | 405 |

**Fig. 4**

Europäisches
Patentamt

European
Patent Office

Office européen
des brevets

## EUROPEAN SEARCH REPORT

Application Number

EP 21 16 9351

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 792 012 A1 (BAYERISCHE MOTOREN WERKE AG [DE]) 17 March 2021 (2021-03-17)<br>* paragraph [0002] - paragraph [0015] *<br>* paragraph [0024] - paragraph [0039] *<br>* figures 2a-3 *<br>----- | 1-15 | INV.<br>B25J9/16 |
| | | | TECHNICAL FIELDS SEARCHED (IPC) |
| | | | G05B<br>B25J |

The present search report has been drawn up for all claims

| Place of search | Date of completion of the search | Examiner |
|---|---|---|
| The Hague | 5 October 2021 | De Santis, Agostino |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 4 079 463 A1

## ANNEX TO THE EUROPEAN SEARCH REPORT
## ON EUROPEAN PATENT APPLICATION NO.

EP 21 16 9351

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2021

| Patent document cited in search report | | | Publication date | Patent family member(s) | Publication date |
|---|---|---|---|---|---|
| EP 3792012 | A1 | | 17-03-2021 | NONE | |

For more details about this annex : see Official Journal of the European Patent Office, No. 12/82

EPO FORM P0459